# DEMANDE DE BREVET EUROPEEN

(11) **EP 0 678 575 A1**
(43) Date de publication de la demande: **25.10.1995**
(21) Numéro de dépôt: 95490015.5
(22) Date de dépôt: 18.04.1995
(51) Int. Cl.: C12G 1/06, C12G 3/06, C12G 3/02

(54) **Boisson naturellement pétillante à base de pommes non tanniques et son procédé de fabrication**

(30) Priorité: 19.04.1994 FR 9404906
(71) Demandeur: TRONQUOY LAGRANGE (SARL), F-59225 Montigny en Cambresis (FR)
(72) Inventeur: Senechal, Eric, F-51100 Reims (FR)
(74) Mandataire: Hennion, Jean-Claude

(57) **Abrégé**

Le Procédé pour la production d'une boisson alcoolisée selon l'invention consiste à utiliser des pommes non tanniques et à mettre en oeuvre les étapes de production du Champagne à l'exception de la chaptalisation, à savoir successivement pressurage, sulfitage, débourbage, fermentation, stabilisation, filtration, prise de mousse, remuage, dégorgement et dosage.

Avantageusement, il comporte, après le débourbage, une étape d'acidification destinée à amener le pH du jus à une valeur comprise entre 3,6 et 3,0, par addition d'acide tartrique à raison de 2 à 4g/l, de préférence 3g/l. Lors de l'opération de stabilisation le taux de SO₂ dans la boisson est de préférence compris entre 70 et 90 mg/l. Après l'opération de stabilisation on peut ajouter des fruits notamment à l'état congelé, aptes à apporter à la boisson de l'arôme et de la couleur par macération, notamment framboises, ou cassis. La boisson naturellement pétillante obtenue est à un degré alcoolique de l'ordre de 8% en volume.

## Description

La présente invention concerne une nouvelle boisson alcoolisée, naturellement pétillante, obtenue à partir de pommes et particulièrement de pommes non tanniques. Elle concerne également un procédé spécialement conçu pour la fabrication d'une telle boisson.

Le cidre est incontestablement la boisson alcoolisée à base de pommes la plus connue. La technique de production de cidre consiste à partir de pommes tanniques, dites pommes à cidre, à réaliser les opérations suivantes : broyage, pressurage (celui-ci étant réalisé généralement après avoir laissé macérer les pommes broyées), fermentation, filtration, stockage et mise en bouteille. Il existe une grande variété de cidres, fonction du type de pommes mises en oeuvre, fonction du stade de fermentation qui a été retenu, par exemple si l'on recherche un cidre sec, on laisse la fermentation aller à son terme c'est à dire jusqu'à la transformation complète du cidre en alcool ; sinon on empêche toute fermentation et on arrête la fermentation à une densité donnée du cidre par centrifugation, filtration et stockage à basse température. Il existe également un cidre pétillant dit cidre mousseux ; pour cela on fait fermenter très lentement le cidre en le soutirant plusieurs fois et on le met en bouteille dite "champenoise" quand il atteint une densité de 1,018 à 1,020. Il y a alors une étape supplémentaire qui réside dans la prise de mousse, qui se fait en bouteilles par une nouvelle fermentation alcoolique.

Quel que soit le type de cidre, cette boisson alcoolisée, éventuellement pétillante, se caractérise par une couleur et un goût particulièrement prononcés dus à la présence des tannins et des arômes préfermentaires.

On a cherché à réaliser d'autres types de boissons alcoolisées, notamment pétillantes, à base de pommes. Par exemple dans le document FR 1 320 311 on a proposé de produire un cidre mousseux selon une méthode dite "procédé champenois". En fait il s'agissait de sélectionner de grands crus de Champagne, de les assembler et de les mettre en fermentation avec du cidre avec addition de sucre et de phosphate d'ammoniaque. Cette culture de ferment était utilisée pour la fermentation d'un cidre ayant un ou deux ans après addition de sucre cristallisé.

Le but que s'est fixé le demandeur est de proposer une boisson alcoolisée naturellement pétillante, à base de pommes, qui ne puisse plus être apparentée au cidre, dans la mesure où elle n'en a ni la couleur ni les propriétés organoleptiques habituelles. Ce but est parfaitement atteint grâce au procédé de l'invention. Celui-ci consiste à utiliser des pommes non tanniques et à mettre en oeuvre les étapes de production du Champagne, à l'exception de la chaptalisation, à savoir successivement : pressurage, sulfitage, débourbage, fermentation, stabilisation, filtration, prise de mousse, remuage, dégorgement et dosage.

Ainsi, contrairement à la fabrication du cidre, la matière de base de la boisson de l'invention consiste non dans des pommes à cidre mais dans des pommes non tanniques, dénommées habituellement pommes à couteau, pommes de table ou pommes à jus. Pour la production de cette boisson, à partir du jus obtenu après pressurage, le procédé est strictement identique à celui qui est adopté pour la production du Champagne à partir de raisin, exception faite de la chaptalisation, c'est à dire de l'ajout de sucre avant fermentation destiné à augmenter le taux d'alcool. En effet dans le cas de la présente boisson, une telle chaptalisation n'est pas nécessaire, le taux de sucre dans le jus étant suffisant pour le taux d'alcool final recherché, de l'ordre de 8% en volume.

De préférence le procédé de l'invention comporte, après le débourbage, une étape d'acidification qui est destinée à amener le pH du jus à une valeur comprise entre 3,6 et 3,0. Cette acidification est de préférence obtenue par addition d'acide tartrique. En effet le demandeur a constaté que la mise en oeuvre de cet acide naturel faisait évoluer les spécificités techniques et sensorielles de la boisson obtenue en la distinguant encore plus nettement de celles du cidre. La boisson en question possède à la fois du pétillant , de l'acidité , de l'amertume et de l'alcool, tout en rappelant discrètement les flaveurs fruité-pomme.

Avantageusement l'acide tartrique est ajouté à raison de 2 à 4g/l sachant toutefois que les doses d'emploi peuvent varier selon les années. Un ajout de 2g/l d'acide tartrique ne permet pas, selon le demandeur, d'exprimer suffisamment le caractère amer et acide ainsi que les flaveurs de pomme ; par contre un ajout de 4g/l semble les exacerber. L'emploi de 3g/l d'acide tartrique présente apparemment le meilleur compromis, permettant de combiner harmonieusement à la fois les sensations acide, amer, alcoolisé et pétillante et les flaveurs pomme-fruité . Bien sûr la dose précise à ajouter sera à déterminer en fonction de l'année, grâce à un contrôle sensoriel.

Avantageusement le pressurage intervient immédiatement après le broyage des pommes. Cette manière de faire permet de conserver tous les arômes de fermentation.

De préférence lors de l'opération de stabilisation, le taux de SO₂ dans la boisson est compris entre 70 et 80 mg par litre. Ce taux évite le déroulement de la fermentation malolactique, c'est à dire la transformation de l'acide malique en acide lactique. Cette fermentation malolactique n'est pas souhaitée dans le cas de la boisson de l'invention dans la mesure où elle fait ressortir les arômes préfermentaires de la pomme et enlève de la vivacité organoleptique à la boisson.

Selon une variante de réalisation, destinée à produire une boisson aromatisée, après l'opération de stabilisation, on ajoute des fruits qui sont aptes à apporter à la boisson de l'arôme et de la couleur par macération, notamment s'agissant de framboises ou de cassis.

On connaît par le document FR 2 580 665 un procédé de fabrication de boisson fermentée aromatisée, consistant à réaliser une prise de mousse selon la méthode champenoise ou la méthode en cuve close d'un vin blanc sec, selon laquelle on ajoute, avant la prise de mousse, une infusion de fruits obtenue à partir d'une macération dans une solution hydroalcoolique de fruits contenant des sucres fermentescibles. Cette infusion peut provenir de fruits tels que cassis, framboises, groseilles, mûres, fraises, pommes, pêches et abricots.

Il est possible de conduire la fermentation jusqu'à disparition de pratiquement tous les sucres fermentescibles, auquel cas on obtient une boisson pétillante non sucrée.

La variante d'aromatisation du procédé de l'invention présente les mêmes avantages que ceux qui sont prévus dans le document FR 2 580 665 mais ne présente pas l'inconvénient de devoir préparer une solution hydroalcoolique indépendante. En effet, il est possible d'obtenir dans le cadre des opérations subséquentes une macération adéquate des fruits et une élimination des matières résiduelles lors de la filtration.

De préférence les fruits ajoutés sont à l'état congelé.

Dans ce cas, il se produit lors de la mise en contact des fruits congelés avec la boisson un éclatement des fruits, favorisant leur accessibilité.

La présente invention sera mieux comprise à la lecture de la description qui va être faite d'un exemple de production dune boisson, naturellement pétillante, à base de pommes non tanniques ayant une teneur en alcool de l'ordre de 8% en volume.

La boisson recherchée dans le cadre de la présente invention est obtenue à base de pommes, mais ne présente aucune des caractéristiques de couleur et d'arôme qui sont traditionnelles du cidre, même du cidre mousseux.

Elle s'apparente beaucoup plus, quant à ces caractéristiques, à un vin mousseux obtenu par la méthode champenoise.

Plus précisément cette boisson est réalisée à partir de pommes non tanniques, c'est à dire de pommes qui sont généralement exclues de la production des cidres, mais qui sont retenues pour la consommation domestique ou encore la production de jus de pommes. Lesdites pommes comportent une quantité particulièrement faible de tannins.

La méthode de fabrication, à partir de ces pommes non tanniques, est tout à fait similaire à celle du Champagne. Elle comporte, après broyage, les étapes suivantes : pressurage, sulfitage, débourbage, fermentation, stabilisation, filtration, prise de mousse, remuage, dégorgement et dosage. Ces opérations étant bien connues par ailleurs, elles ne seront pas explicitées en détail. Seules seront données les particularités liées à la boisson de l'invention.

Contrairement à ce qui se passe généralement lors de la production du cidre, les pommes non tanniques sont broyées puis très rapidement pressurées, sans être laissées à macérer. Ceci évite d'extraire certains aromes de fermentation.

Lors du sulfitage, les jus sont sulfités par ajout de SO₂ ou de bisulfite de potassium dès écoulement, afin d'éviter toute oxydation. Lors du débourbage, les jus sont laissés au repos quelques heures, en moyenne de six à douze heures, et éventuellement additionnés de produits oenologiques, tels que la caséine, la bentonite, le noir végétal, des enzymes pectinolictiques. De préférence on ajoute du noir végétal, de manière à enlever certains aromes préfermentaires. Dans le cas de la présente boisson, seuls sont recherchés les aromes de fermentation, au contraire de ce qui se passe dans la fabrication du cidre.

Après le débourbage, on procède avantageusement à une acidification à l'aide d'acide tartrique à raison de 2 à 4g/l de manière à porter le pH à une valeur comprise entre 3,6 et 3,0. De préférence la valeur retenue pour le pH sera de l'ordre de 3/3,10.

Cette étape d'acidification n'intervient pas dans la production du vin par la méthode champenoise.

Par contre dans le procédé de l'invention et contrairement à la méthode champenoise, il n'y a pas d'opération de chaptalisation, c'est à dire d'ajout de sucre avant fermentation. Cet ajout de sucre de canne ou de betterave est destiné à augmenter le taux d'alcool de la boisson finale. Dans le cas de la présente boisson, du fait des matières premières utilisées, la quantité de sucre est jugée suffisante pour le taux d'alcool final qui est recherché, à savoir de l'ordre de 8% en volume.

Pour la fermentation, les jus sont ensemencés avec des levures sélectionnées, qui sont les levures retenues dans la méthode champenoise, dite LSA, c'est à dire levure sèche active. La stabilisation intervient par l'ajout de SO₂, à raison de 70 à 90 mg par litre, de manière à bloquer la fermentation malolactique, qui fait généralement suite à la fermentation alcoolique. Cette fermentation malolactique n'est pas recherchée dans le cas de la présente boisson car elle fait ressortir les aromes préfermentaires de pommes, ce qui enlève de la vivacité organoleptique.

La filtration est une filtration stérilisante permettant d'enlever également les bactéries.

La prise de mousse se fait après ajout de sucre à raison de 23 g par litre, de levures sélectionnées, qui peuvent être les mêmes que celles mises en oeuvre pour la fermentation, et d'adjuvants de remuage.

Les opérations de remuage, de dégorgement et dosage, ne sont pas modifiées. Il est donc possible, grâce au dosage d'obtenir une boisson ayant une teneur différenciée en sucre du type sec, demi-sec, brut ou extra-brut.

L'aromatisation de la boisson selon l'invention se fait, de manière tout à fait caractéristique, en ajoutant des fruits à partir de l'opération de stabilisation et avant la prise de mousse. De préférence, il s'agit de fruits qui ont été préalablement congelés, de manière à ce que lors de leur mise en contact avec les jus, les fruits éclatent ce qui les rend plus accessibles.

On peut ajouter notamment des framboises, cassis, groseilles, mûres, ..., tout fruit apte à apporter à la boisson de l'arome et de la couleur par macération. En effet c'est grâce à la macération qui se produit au cours des étapes ultérieures que l'on peut obtenir l'extraction des aromes et des couleurs contenus dans les fruits. La boisson aromatisée ainsi obtenue comporte des aromes qui sont très présents en bouche, contrairement à ce qui se passe lorsque l'on ajoute un concentré de fruits lors de l'opération de dosage.

La boisson obtenue est une boisson naturellement pétillante , qui a un degré alcoolique de l'ordre de 8% en volume. Les spécificités sensorielles qu'elle présente varient sensiblement en fonction de la quantité d'acide tartrique qui a été ajoutée . Les résultats obtenus par le demandeur, pour une année donnée, l'ont conduit à retenir la fourchette de 2 à 4g/l d'acide tartrique avec une préférence pour 3g/l qui conduit au meilleur compromis entre d'une part les sensations acide, amer, alcoolisé et pétillante et d'autre part les flaveurs pomme-fruité.

## Revendications

1. Procédé pour la production d'une boisson alcoolisée à partir de pommes caractérisé en ce qu'il consiste à utiliser des pommes non tanniques et à mettre en oeuvre les étapes de production du Champagne à l'exception de la chaptalisation, à savoir successivement pressurage, sulfitage, débourbage, fermentation, stabilisation, filtration, prise de mousse, remuage, dégorgement et dosage.

2. Procédé selon la revendication 1 caractérisé en ce qu'il comporte, après le débourbage, une étape d'acidification destinée à amener le pH du jus à une valeur comprise entre 3,6 et 3,0.

3. Procédé selon la revendication 2 caractérisé en ce que l'étape d'acidification est réalisée par addition d'acide tartrique à raison de 2 à 4g/l.

4. Procédé selon la revendication 3 caractérisé en ce que l'étape d'acidification est réalisée par addition d'acide tartrique à raison de 3g/l.

5. Procédé selon l'une des revendications 1 à 4 caractérisé en ce que l'opération de pressurage est précédée immédiatement d'une opération de broyage des pommes.

6. Procédé selon l'une des revendications 1 à 5 caractérisé en ce que lors de l'opération de stabilisation le taux de SO₂ dans la boisson est compris entre 70 et 90 mg/l.

7. Procédé selon l'une des revendications 1 à 6 caractérisé en ce qu'après l'opération de stabilisation on ajoute à la boisson des fruits, aptes à apporter à la boisson de l'arôme et de la couleur par macération, notamment framboises, ou cassis.

8. Procédé selon la revendication 7 caractérisé en ce que les fruits ajoutés sont à l'état congelé.

9. Boisson naturellement pétillante à base de pommes non tanniques ayant un degré alcoolique de l'ordre de 8% en volume, obtenue par la mise en oeuvre du procédé selon l'une des revendications précédentes.

10. Boisson présentant à la fois des sensations acide, amer, alcoolisé et pétillante et des flaveurs pomme-fruité, obtenue par la mise en oeuvre du procédé selon la revendication 4.
